(19)

Europäisches
Patentamt
European
Patent Office
Office européen
des brevets

(11) **EP 4 328 081 A1**

(12) **EUROPEAN PATENT APPLICATION**

(43) Date of publication:
**28.02.2024  Bulletin 2024/09**

(21) Application number: **22192276.8**

(22) Date of filing: **26.08.2022**

(51) International Patent Classification (IPC):
**B60L 58/12** *(2019.01)*

(52) Cooperative Patent Classification (CPC):
**B60L 58/12;** B60L 2260/52; B60L 2260/54

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Scania CV AB
151 87 Södertälje (SE)**

(72) Inventors:
• **ERIKSSON, Linus
  12534 Älvsjö (SE)**
• **BOSTRÖM, Richard
  155 30 Nykvarn (SE)**

(74) Representative: **Scania CV AB
Patents, GP 117kv
151 87 Södertälje (SE)**

(54) **METHOD AND CONTROL ARRANGEMENT FOR SETTING A REMAINING DISTANCE TO EMPTY PARAMETER IN AN ELECTRIC VEHICLE**

(57)    The invention relates to a method performed by a control arrangement for setting a remaining Distance to Empty parameter in an electric vehicle, wherein the control arrangement is configured to estimate a first remaining Distance to Empty value at least based on a remaining State of Charge of the vehicle's energy storage. The method comprises when the first remaining Distance to Empty value is estimated to be below a Distance to Empty threshold value determining a second remaining Distance to Empty value at least based on an actual distance travelled since the first remaining Distance to Empty value was estimated to be below the Distance to Empty threshold value. The method further comprises setting the remaining Distance to Empty parameter at least based on the second remaining Distance to Empty value. Hereby, the risk of rapid decrease of the Distance to Empty parameter at low battery charging level is mitigated and the Distance to Empty parameter will be perceived as correct which means that unnecessary stress is avoided when low State of Charge of the vehicle's energy storage is reached. The invention also relates to a control arrangement, a vehicle comprising the control arrangement, a computer program, and a computer-readable medium.

```
200

┌─────────────────────┐
│       [210]         │
│   Estimate DTE₁     │
└─────────────────────┘
           │
           ▼
┌─────────────────────┐
│       [220]         │
│   Determine DTE₂    │
└─────────────────────┘
           │
           ▼
┌─────────────────────┐
│       [230]         │
│ Set DTE based on DTE₂ │
└─────────────────────┘
```

Figure 2a

EP 4 328 081 A1

## Description

## Technical field

The invention relates to a method and a control arrangement for setting a remaining Distance to Empty parameter in an electric vehicle.

The invention also relates to a computer program and a computer-readable medium and a vehicle comprising such a control arrangement.

## Background

The following background description constitutes a description of the background to the invention, which does not, however, necessarily have to constitute prior art.

One of the major global challenges today is reducing the negative impacts of road transportation on the environment due to greenhouse gas emissions. This has led to an increased interest in vehicle electrification. The powertrain of vehicles powered by electrical power, i.e. electric vehicles, comprises an electrical machine system with an energy storage such as one or more batteries serving as an energy buffer and at least one electrical machine.

When driving an electric vehicle, especially during long distance routes, the vehicle operator must be able to carefully plan the recharging of the vehicle's energy storage taking into consideration aspects like the range of the vehicle, the charging infrastructure along the vehicle's route and time constraints during the route.

In today's electric vehicles it is possible to determine the remaining distance the vehicle can be driven before a recharging is required, often referred as the remaining Distance to Empty, DTE. Typically, in electric vehicles a real-time estimate of the DTE is displayed on one of the electronic instruments of the vehicle's dashboard and used by the vehicle operator to plan the vehicle's route.

An accurate DTE calculation may reduce the vehicle operator's concerns of running out of power during the route.

## Summary

It is an objective of the present invention to provide a method and a control arrangement for mitigating or solving drawbacks of conventional solutions. In particular an objective of the present invention is to provide a solution for setting a remaining Distance to Empty, DTE, parameter in an electric vehicle. The DTE parameter is determined and set at least such that the reliability of the remaining distance the vehicle can be driven before a recharging is required is improved.

According to a first aspect of the invention, aforementioned and further objectives are achieved through a method performed by a control arrangement for setting a remaining Distance to Empty parameter in an electric vehicle, wherein the control arrangement is configured to estimate a first remaining Distance to Empty value at least based on a remaining State of Charge of the vehicle's energy storage,

the method comprising, when the first remaining Distance to Empty value is estimated to be below a Distance to Empty threshold value:

determining a second remaining Distance to Empty value at least based on an actual distance travelled since the first remaining Distance to Empty value was estimated to be below the Distance to Empty threshold value, and

setting the remaining Distance to Empty parameter at least based on the second remaining Distance to Empty value.

The State of Charge, SoC, of the vehicle's energy storage may be understood as the level of charge of the energy storage relative its capacity. The vehicle's energy storage may comprise one or more electrical batteries.

The invention relates thus to an inventive method for determining and setting a DTE parameter when the DTE value is estimated to be below a threshold value, here referred to as the Distance to Empty threshold value, $DTE_{th}$. When this is the case, the DTE parameter is set based on the actual distance the vehicle has travelled since the DTE value was estimated to be below the threshold value. The $DTE_{th}$ may here relate to a remaining distance, e.g., when the energy of, i.e., the SoC level of, the vehicle's energy storage is low. The SoC level of the vehicle's energy storage may, for example correspond to a level below which the DTE parameter may be perceived as being less reliable by the vehicle operator due to increased risk of rapid decrease.

Hereby, the risk of rapid decrease of the DTE parameter at low battery capacity is mitigated. The vehicle operator's confidence in the reliability and accuracy of the DTE parameter will increase compared to the conventional DTE determining methods. The vehicle operator will experience the DTE parameter as correct which means that unnecessary stress is avoided when low SoC is reached.

In an embodiment of the invention, the remaining Distance to Empty parameter is set to the second remaining Distance to Empty value when the first remaining Distance to Empty value is estimated to be below the Distance to Empty threshold value.

Hereby, the DTE parameter will be set in a, for the vehicle operator, very predictable way which will further increase the vehicle operator's trust in the parameter.

In an embodiment of the invention, the setting of the remaining Distance to Empty parameter when the first remaining Distance to Empty value is estimated to be below a Distance to Empty threshold value comprises:

setting the remaining Distance to Empty parameter to the second remaining Distance to Empty value when the second remaining Distance to Empty value exceeds the first remaining Distance to Empty value, otherwise,

setting the remaining Distance to Empty parameter to equal the first remaining Distance to Empty value.

Hereby, the DTE parameter is allowed to deviate from the actual distance the vehicle has travelled to reflect the remaining travel distance more accurately in case the load on the vehicle's electrical machine decreases and higher DTE is expected than previously.

In an embodiment of the invention, the method further comprises, when the first remaining Distance to Empty value is estimated to equal or exceed the Distance to Empty threshold value:

setting the remaining Distance to Empty parameter to equal the first remaining Distance to Empty value.

By setting the DTE parameter to the first remaining Distance to Empty value when the first remaining Distance to Empty value is estimated to equal or exceed the Distance to Empty threshold value, the DTE parameter is determined and set according to conventional methods based on a remaining SoC of the vehicle's energy storage.

Hereby the DTE parameter is determined and set in a reliable and accurate way until a low SoC of the vehicle's energy storage is reached.

In an embodiment of the invention, the second remaining Distance to Empty value is determined by subtracting the actual distance travelled since the first remaining Distance to Empty value was estimated to be below the Distance to Empty threshold value from the Distance to Empty threshold value.

The result is a robust method for determining the second remaining Distance to Empty value which takes into account a travelled distance. The determined second remaining Distance to Empty value is highly predictable with no rapid drops and will thus not negatively surprise the vehicle operator. Said determined second remaining Distance to Empty value can be determined with very great precision, resulting in a DTE determining method which is perceived as accurate by the vehicle operator.

In an embodiment of the invention, the method further comprises determining the actual distance travelled since the first remaining Distance to Empty value was estimated to be below the Distance to Empty threshold value based on at least one of trip meter mileage, odometer mileage, map data and/or GPS data.

Hereby, said actual travelled distance can be determined in a precise way.

In an embodiment of the invention, the threshold value is a pre-determined value.

In an embodiment of the invention, the method further comprising determining the threshold value at least based of one of

- one or more vehicle related parameters,
- information related to a vehicle route,
- information related to a driving pattern of the vehicle,
- information related to auxiliary loads of the vehicle, and
- capacity of the vehicle's energy storage.

The auxiliary loads of the vehicle may be understood as the load applied by auxiliary equipment, such as air conditioning, cooling system, electrical systems etc.

In an embodiment of the invention, the one or more vehicle related parameter comprises vehicle weight.

In an embodiment of the invention, the information related to a vehicle route comprises one or more of a topology of a recent vehicle route and a topology of an upcoming vehicle route.

Hereby, the threshold value may be optimized such that risk of damage the vehicle's energy storage is reduced.

In an embodiment of the invention, the information related to a vehicle route may be obtained at least based on one of map data and sensor data.

Hereby, the information related to a vehicle route may be obtained in an accurate way.

In an embodiment of the invention, the information related to a driving pattern of the vehicle comprises one or more of a current drive mode and a driving preference of a current vehicle operator.

Hereby, the threshold value may be obtained in an accurate way.

In an embodiment of the invention, the method further comprises presenting the remaining DTE parameter to the vehicle.

The result is a user-friendly method according to an aspect of the invention.

According to a second aspect, the invention relates to a method performed by a control arrangement for controlling an electrical machine of an electric vehicle, wherein the electrical machine is configured to provide a maximum available power for propelling the vehicle, the method comprising, when a remaining DTE parameter value is decreased to 0:

reducing the maximum available power provided by the electrical machine for operating the vehicle, wherein the remaining DTE parameter is set according to the method of the first aspect.

By reducing the maximum available power provided by the electrical machine for operating the vehicle when the remaining DTE parameter value is decreased to 0, the vehicle is operated in an energy efficient turtle mode. This means that the vehicle is provided with a limited operational capacity i.e., a reduced propelling power after the usable energy in the vehicle's energy storage has been reduced to 0. Hereby, the vehicle's energy usage is decreased and the vehicle operator is enabled to reach a safe stop such as a nearest charging station at the vehicle's own power.

Hereby increased driving safety is obtained which improves the overall comfort of the vehicle.

According to a third aspect, the invention relates to a control arrangement for setting a remaining DTE parameter in an electric vehicle, wherein the control arrangement is configured to estimate a first remaining Distance to Empty value at least based on a remaining State of Charge of the vehicle' energy storage,

the control arrangement being configured to, when the first remaining Distance to Empty value is estimated to be below a Distance to Empty threshold value:

determine a second remaining Distance to Empty value at least based on an actual distance travelled since the first remaining Distance to Empty value was estimated to be below the Distance to Empty threshold value, and

set the remaining Distance to Empty parameter at least based on the second remaining Distance to Empty value.

It will be appreciated that all the embodiments described for the method aspects of the invention are applicable also to at least one of the control arrangement aspects of the invention. Thus, all the embodiments described for the method aspects of the invention may be performed by the control arrangement. The control arrangement and its embodiments have advantages corresponding to the advantages mentioned above for the methods and their embodiments.

According to a fourth aspect of the invention, aforementioned and further objectives are achieved through a vehicle comprising the control arrangement of the third aspect. The vehicle may for example be a bus, a truck, or a car.

According to a fifth aspect, the invention relates to a computer program comprising instructions which, when the program is executed by a computer, cause the computer to carry out the method according to the first aspect and/or the second aspect.

According to a sixth aspect, the invention relates to a computer-readable medium comprising instructions which, when executed by a computer, cause the computer to carry out the method according to the first aspect and/or the second aspect.

The above-mentioned features and embodiments of the method, the control arrangement, the vehicle, the computer program, and the computer-readable medium, respectively, may be combined in various possible ways providing further advantageous embodiments.

Further advantageous embodiments of the method, the control arrangement, the vehicle, the computer program, and the computer-readable medium according to the present invention and further advantages with the embodiments of the present invention emerge from the detailed description of embodiments.

**Brief description of the drawings**

Embodiments of the invention will be illustrated in more detail below, along with the enclosed drawings, where similar references are used for similar parts, and where:

Figure 1 shows a schematic view of an exemplary vehicle in which embodiments of the present invention may be implemented;

Figure 2a shows a flow chart of a method for setting a remaining Distance to Empty parameter in an electric vehicle according to embodiments of the invention;

Figure 2b shows a flow chart of a method for setting a remaining Distance to Empty parameter in an electric vehicle according to further embodiments of the invention;

Figure 2c shows a flow chart of a method step of setting a remaining Distance to Empty parameter in an electric vehicle according to an embodiments of the invention;

Figure 2d shows a flow chart of a method step of setting a remaining Distance to Empty parameter in an electric vehicle according to an embodiments of the invention;

Figure 3 shows a flow chart of a method for controlling an electrical machine system of an electric vehicle according to an embodiments of the invention;

Figure 4 illustrates the principle of one embodiment of the invention in one driving situation;

Figure 5 shows a control arrangement, in which a method according to any one of the herein described embodiments may be implemented.

**Detailed description**

In today's electric vehicles, a measurement of how far the vehicle can travel before a recharging of the vehicle's energy storage, such that one or more batteries is required, often referred as the vehicle's remaining Distance to Empty, DTE, is typically determined and presented on a display to the vehicle operator. The vehicle operator is thus enabled to use this information for planning the vehicle's route, e.g., by planning where and when to stop for battery recharge.

According to conventional methods, DTE is based on the amount of energy currently contained in the vehicle's energy storage taking into account different driving styles and different driving conditions. For example, DTE may be determined considering the topology of the vehicle's route and an estimated amount of power required to propel the vehicle according to a required speed profile. Moreover, by evaluating the individual driving behavior and energy consumption of different vehicle operators over a specific period of time, the DTE can be adapted for the current vehicle operator.

Overall, many conventional methods for determining DTE based on above-mentioned parameters are often perceived by the vehicle operators as reliable and accurate when the State of Charge, SoC, of the vehicle's energy storage is high or moderate. However, as the SoC of the energy storage drops, the estimated DTE may be perceived as less reliable, since even small changes in the input parameters may have a large impact on the DTE calculation algorithm when the SoC of the vehicle's energy storage is low. This may cause DTE dropping fast at low SoC which may adversely affect the vehicle operator's confidence in the reliability of the DTE calculations and cause the vehicle operator to feel uneasy and worried to run out of power during the route before reaching a charging station.

$

It is thus an objective of the present invention to provide a method and a control arrangement for setting a remaining Distance to Empty parameter in an electric vehicle such that these and further problems are at least partly solved.

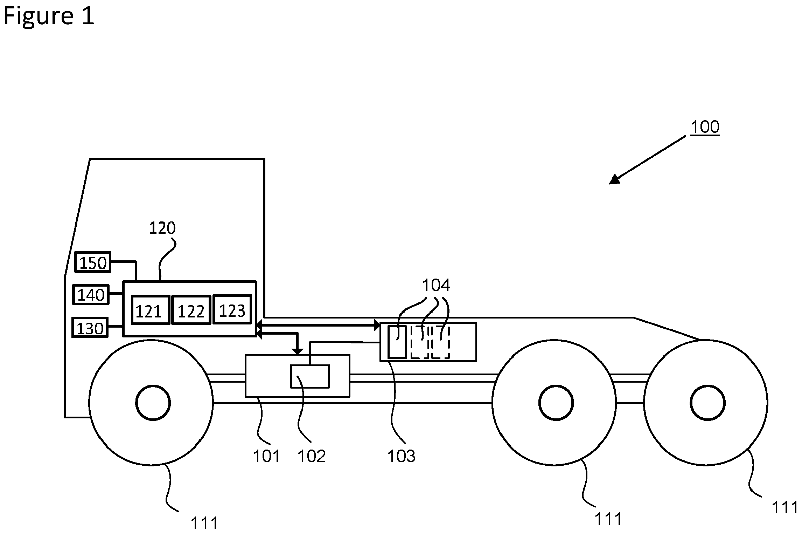

Figure 1, which will be used to explain the herein presented embodiments, shows a side view of a vehicle 100. The vehicle 100 may be an electrical vehicle such as, e.g., a truck or a bus. Although not illustrated in Figure 1, the vehicle 100 may be equipped with a trailer. The vehicle may alternatively be a car. The vehicle 100 illustrated in Figure 1 may comprise a powertrain 101, for example configured for an electric vehicle EV such as a battery electric vehicle BEV. The powertrain 101 of the vehicle 100 may comprise at least one electrical machine 102 configured for providing torque to one or more wheels 111 of the vehicle 100. Although, only wheels 111 on one side of the vehicle 100 are illustrated in Figure 1, it is to be understood that the vehicle 100 may have fewer or more wheels that than what is shown in Figure 1.

The at least one electrical machine 102 may be arranged essentially anywhere, as long as torque is provided to one or more of the wheels of the vehicle, for example adjacent to one or more of the wheels, or in any other conventional way as is understood by a skilled person.

The vehicle 100 may comprise an energy storage 103, e.g. comprising one or more electric batteries 104. The energy storage 103 may be configured to provide the at least one electrical machine 102 with electrical power.

It is to be understood that the vehicle 900 may include further units, components, such as electrical and/or mechanical components not illustrated in Figure 1. However, in Figure 1, only the units/devices/entities of the vehicle required for understanding the present invention are illustrated.

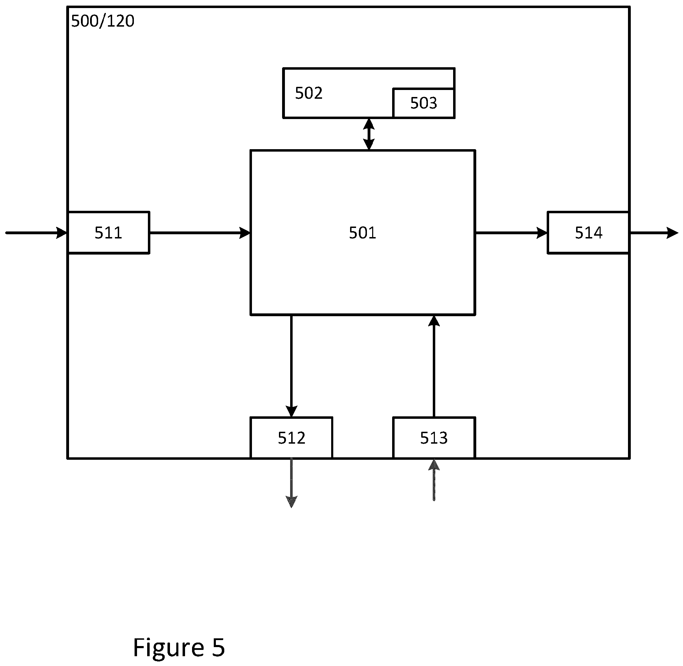

The powertrain 101 of the vehicle, the energy storage 103 as well as other units in the vehicle may be controlled by a vehicle control system via a control arrangement 120. The control arrangement 120 may be distributed on several control units configured to control different parts of the vehicle 100. The control arrangement 120 may e.g. include a unit 121 for estimating a first remaining DTE value, a unit 122 for determining a second remaining DTE value, and a unit 123 for setting a remaining DTE parameter, i.e., units arranged for performing the method steps of the disclosed invention as is explained further on. The control arrangement 120 will be described in further detail in Figure 5.

The vehicle 100 may further include one or more sensors 130, e.g. at least one camera located at suitable positions within the vehicle 100.

Further, the vehicle 100 may comprise a positioning system/unit 140. The positioning unit 140 may be based on a satellite navigation system such as the Navigation Signal Timing and Ranging (Navstar), Global Positioning System (GPS), Differential GPS (DGPS), Galeo, GLONASS, or the like. Thus, the positioning unit 140 may comprise a GPS receiver.

It is to be understood that the above mentioned one or more sensors 130 and positioning system/unit 140 may be configured for communication with the control arrangement 120 to provide the control arrangement 120 with relevant information.

The vehicle may also comprise presentation means 150 adapted for presenting information to the vehicle operator. The presentation means may be provided for communication with the control arrangement 120. Said presentation means may comprise a display and or loudspeaker equipment and may be fitted in an instrument panel in the vehicle.

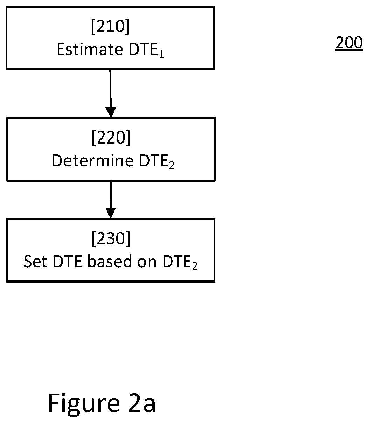

The first aspect of proposed invention will now be described with reference to a method 200 performed by a control arrangement, disclosed in Figure 2a, for setting a remaining DTE parameter in an electric vehicle, such as the vehicle 100 disclosed in Figure 1. The control arrangement may correspond to the control arrangement 120 disclosed in Figure 1 and being configured to:

- in a first step 210 of the method 200 estimate a first remaining Distance to Empty $DTE_1$ value at least based on a remaining State of Charge SoC of the vehicle's energy storage.

The method 200 comprises when the $DTE_1$ value is estimated to be below a Distance to Empty threshold $DTE_{th}$ value:

- in a second step 220 determining a second remaining Distance to Empty $DTE_2$ value at least based on an actual distance travelled since the $DTE_1$ value was estimated to be below the $DTE_{th}$ value, and
- in a third step 230 setting the DTE parameter at least

based on the $DTE_2$ value.

The first step 210 of the method 200 in Figure 2a estimates thus a remaining travel distance the vehicle can travel on the amount of energy currently available in the vehicle's energy storage such as one or more batteries using an algorithm according to previously known methods. The remaining travel distance estimated in step 210 is referred to as the first remaining Distance to Empty value or a $DTE_1$ value.

Today, there is a large number of previously known methods for determining the remaining travel distance in electric vehicles using algorithms which may be applied in the first step 210 of the method 200 to estimate the $DTE_1$. According to the invention, said conventional algorithm takes into account the remaining State of Charge, SoC, of the energy storage 103 in the vehicle 100 when determining the vehicle's remaining travel distance, $DTE_1$. However, the conventional algorithm may additionally take into account further parameters when estimating the $DTE_1$ value. Such parameters may include the topology of the vehicle's route, an estimated amount of power required to propel the vehicle according to a required speed profile, and the vehicle operator's driving behavior driving behavior to mention a few.

In previously known methods, after estimating the available remaining travel distance, the remaining Distance to Empty DTE parameter is set to the estimated value and, optionally, presented to the vehicle operator.

As previously explained, many of previously known methods are perceived by vehicle operators as less reliable when the remaining amount of energy in the vehicle's energy storage drops. The DTE parameter may for example decrease rapidly when the state of charge SoC of the vehicle's energy storage decreases, depending on for example changed conditions such as increased energy consumption due to changed speed profile, more energy demanding road topology, starts restarts of the vehicle to mention a few. When the remaining amount of energy in the vehicle's energy storage drops such increased energy need may have a large impact on the estimated remaining available travel distance. As a consequence, the vehicle operator may not be able to fully trust the displayed DTE parameter and use it to plan the vehicle's route and recharging.

The present invention modifies the previously known methods for determining and setting the DTE parameter in a vehicle when the vehicle's estimated remaining available distance falls below a threshold value $DTE_{th}$. Instead of setting the DTE parameter to the estimated available remaining travel distance according to previously known methods, i.e., to the estimated $DTE_1$ value, a remaining available distance, $DTE_2$ is determined according to an inventive algorithm based on the distance the vehicle 100 has travelled since the remaining available distance estimated according to previously known methods was below the threshold value $DTE_{th}$. The DTE parameter is thereafter set at least based on

the determined $DTE_2$ value.

By setting the DTE parameter to a $DTE_2$ value based on an actual distance travelled, the risk of DTE parameter dropping at low SoC level of the vehicle's energy storage is avoided and the vehicle operator's confidence in the DTE parameter may increase.

The DTE threshold, $DTE_{th}$, may be understood as a remaining distance below which the $DTE_1$ value estimated based on remaining SoC of the vehicle's energy storage, may be perceived as less reliable due to increased variations. The $DTE_{th}$ may in one example depend on the size of the vehicle's energy storage. A large energy storage may allow a larger $DTE_{th}$ than a small energy storage. A non-limiting example of such $DTE_{th}$ may be a value between 50 and 10 km. The $DTE_{th}$ may in one example be 30 km. The $DTE_{th}$ may be available in the vehicle's control system when the method 200 is executed as will be explained further on.

A consequence of applying the method of the invention may be that a part of a safety margin available in the vehicle's energy storage may need to be used if the remaining distance $DTE_2$ exceeds the $DTE_1$ and provided the very rare situation that the vehicle will be in motion until the DTE parameter drops to zero.

Briefly described, there are two types of SoC used to describe the energy level of a vehicle's energy storage. One is referred to as an operational SoC and the second as a technical SoC. The operational SoC relates to the energy available for normal use of the vehicle, which in general in not the complete amount of energy available in the energy storage. The operational SoC is typically the only SoC visible to the vehicle operator. The technical SoC on the other hand, relates to the actual energy of the energy storage from completely empty to completely full. The technical SoC is not visible to the vehicle operators and the difference between 0% operational SoC and 0% technical SoC may be considered as a safety margin.

A complete draining of the energy storage should be avoided as far as possible since that will negatively affect the lifespan of the energy storage and its capacity. To prevent that from happening, the operational SoC is typically limited such that there is still an amount of energy left in the energy storage when the operational SoC is 0. That amount of energy corresponds to the above-mentioned safety margin. According to conventional solutions, estimating the remaining available distance DTE in a vehicle is based on the operational SoC. Once the operational SoC is reduced to 0%, no remaining travel distance is available and the DTE parameter displays 0% charging left. Typically, when this happens, the vehicle enters a turtle mode of operation which means that the maximum power available to the vehicle's electrical machine is heavily reduced and the vehicle may run an additional distance in a reduced capacity, thereby using a part of the safety margin energy.

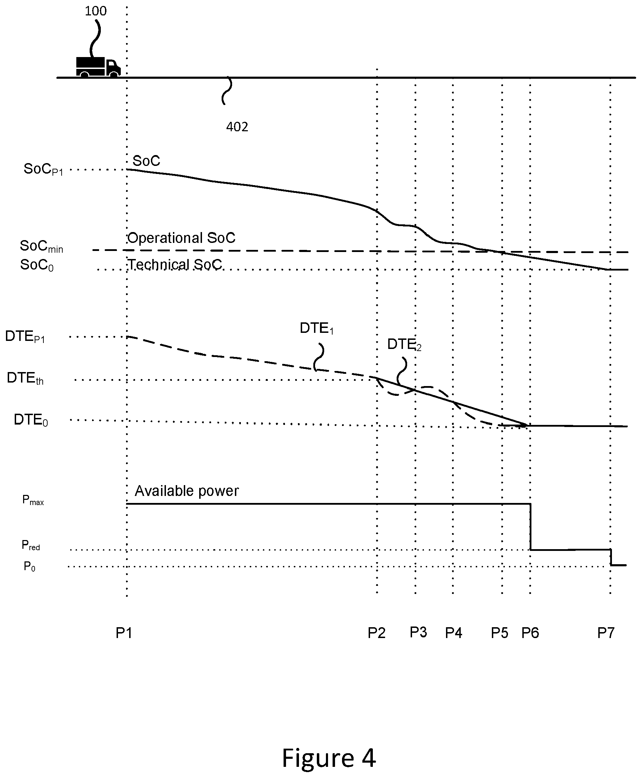

However, by applying the method of the invention, the DTE parameter at low SoC may no longer be determined based on the SoC of the vehicle's energy storage but rather on an actual distance the vehicle travels. In some situations, for example when the vehicle's energy consumption is increased resulting in sudden drop of battery SoC, the determined $DTE_2$ value may exceed the $DTE_1$ value as illustrated in Figure 4 which will be discussed and explained in the following.

Figure 4, which may be used to further explain the method according to the invention, illustrates a driving situation where the aspect of method 200 illustrated in Figure 2a and further embodiments of the method may be implemented. Figure 4 shows a vehicle, such as the vehicle 100 disclosed in Figure 1, driving through a route denoted as 410. The driving situation illustrated in Figure 4 is described in terms of positions such as P1, P2, etc.

Figure 4 further shows a plot of the SoC of the vehicle's energy storage, i.e. the SoC of the one or more electric batteries 104. Thus, as may be seen in Figure 4 at the position P1, the SoC of the vehicle's energy storage, i.e., the energy contained in the vehicle's energy storage is at a level denoted as $SoC_{P1}$. While the vehicle 100 consumes energy, e.g., by travelling on the route 410, the energy of the energy storage decreases unless the energy storage is recharged. At the position P5, the SoC of the vehicle's energy storage is decreased to a minimum state of charge, $SoC_{min}$, corresponding to the operational SoC of the energy storage being drained to 0%. However, as illustrated in Figure 4, below 0% operational SoC there is still energy in the energy storage corresponding to the previously described safety margin. In the rare situation where the vehicle continues to be propelled after reaching the minimum state of charge, $SoC_{min}$, the energy storage will be completely drained at the position P7.

Figure 4 further shows the vehicle's DTE parameter between the position P1 and the position P7. The dashed DTE plot between the position P1 and P5 corresponds to the $DTE_1$ value estimated in step 210 of the method 200 while the solid DTE plot between the position P2 and the position P6 corresponds to the $DTE_2$ value determined in step 220 of the method 200. Thus, as illustrated in Figure 4, a DTE parameter based on the estimated $DTE_1$ value falls to zero when the SoC of the energy storage is drained, i.e., at the position P5. The DTE parameter based on $DTE_2$ is not correlated with the SoC and may reach zero after the energy storage is drained, i.e. at the position P6 in Figure 4.

Thus, by applying the method of the invention, the vehicle is guaranteed to reach the distance estimated at the $DTE_{th}$ also at low SoC, hence avoiding situations where the vehicle operator may be subject to stress by the remaining distance reducing faster than the actual travelled distance.

It is to be understood that the method 200 may be employed on substantially all types of electric vehicles in which the propelling power for propulsion of the vehicle is generated by one or more electrical machines 102.

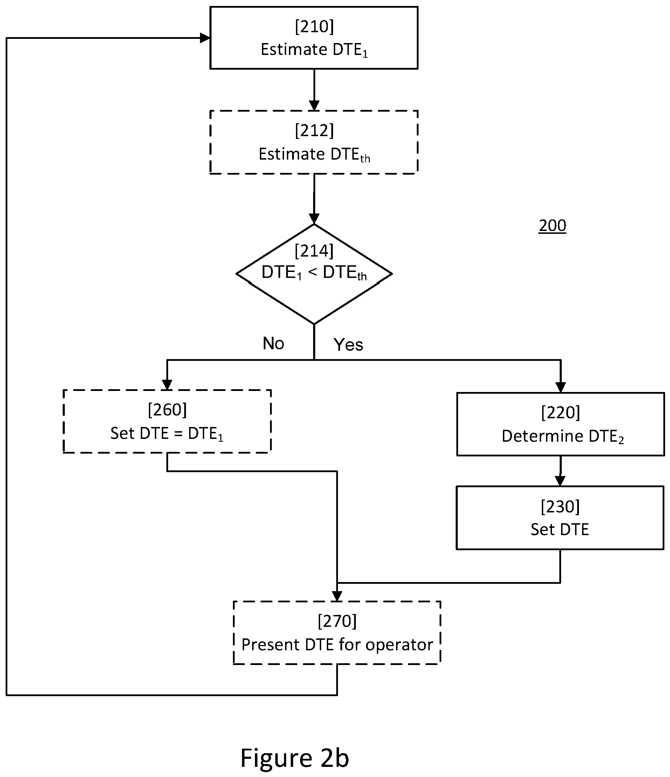

The inventive method 200 as well as further embodiments of the invention will now be explained more in detail with reference to Figure 2b. Figure 2b discloses a flowchart of the method 200 comprising the method steps 210 - 230 described with reference to Figure 2a and further optional steps which may, in embodiments be comprised in the method 200. It should be noted that the method steps illustrated in Figure 2b and described herein do not necessarily have to be executed in the order illustrated in Figure 2b. The steps may essentially be executed in any suitable order, as long as the physical requirements and the information needed to execute each method step is available when the step is executed.

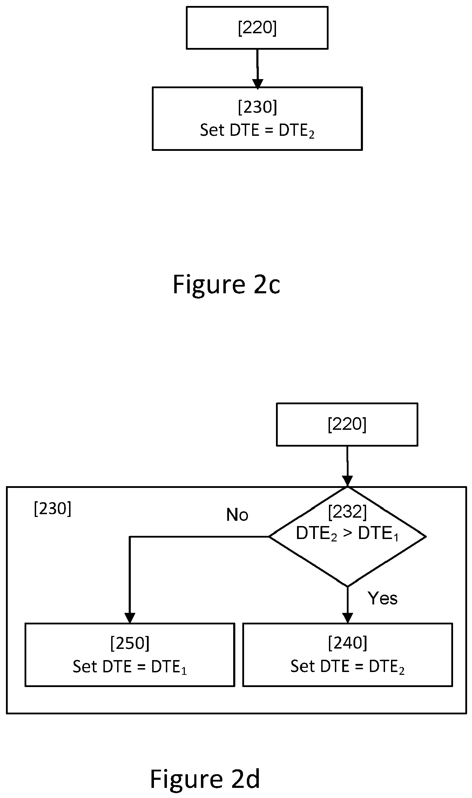

The steps 210 - 270 of the method 200 illustrated in Figure 2 may be repeated in order to continuously update the remaining DTE parameter according to a suitable sampling interval.

As previously explained the method 200 of determining and setting a DTE parameter in a vehicle may start by executing the step 210 in Figure 2b as described with reference to Figure 2a. Thus, in step 210 a first remaining Distance to Empty $DTE_1$ value is estimated using a conventional algorithm which takes into account the current SoC of the vehicle's energy storage as illustrated in Figure 4 by the dashed DTE1 plot between the position P1 and the position P5.

When the $DTE_1$ value has been estimated, the method 200 in Figure 2b continues to step 214 where the estimated $DTE_1$ value is compared to the threshold value $DTE_{th}$. Thus, the threshold value $DTE_{th}$ is required to execute the method 200.

As previously explained, the DTE threshold $DTE_{th}$ may be understood as a remaining distance related to low SoC of the vehicle's energy storage. In Figure 4, the DTE parameter is decreased to a value corresponding to $DTE_{th}$ is the position P2.

In an embodiment, the $DTE_{th}$ may be a predetermined value. The $DTE_{th}$ may e.g., be preconfigured in the vehicle's control system. In one example, the $DTE_{th}$ may correspond to remaining available distance in the vehicle at a suitable SoC level of the vehicle's energy storage. The suitable SoC level may be a level below which the DTE parameter may be perceived as being less reliable by the vehicle operator due to increased risk of rapid decrease of the DTE parameter. Such SoC level may be obtained during test drives or from used feedback information.

The size of $DTE_{th}$ may be a tradeoff between obtaining a stable and reliable DTE parameter and on the other side, risking that part of the technical safety margin of the vehicle's energy storage may need to be used if the $DTE_2$ value exceeds $DTE_1$ value and the vehicle is allowed to fall below the SoC min operational as shown in Figure 4 between the position P5 and the position P6. As previously explained, using the technical safety margin of the vehicle's energy storage may increase the risk of capacity decrease and decreased lifespan of the energy storage. One way of decreasing the risk of completely draining the vehicle's energy storage could involve increasing the technical safety margin. However, the difference between energy levels of the operational and technical SoC is typically set by the manufacturer of the energy storage and may vary between different manufacturers. Instead the risk of overusing the technical margin may be reduced by adaptively determine the $DTE_{th}$ based the current conditions.

Thus, in an embodiment, the step 214 may be preceded by an optional step 212 where the DTE threshold $DTE_{th}$ is determined, at least based on a one of: one or more vehicle related parameters, information related to a vehicle route, information related to a driving pattern of the vehicle, information related to auxiliary loads of the vehicle, and capacity of the vehicle's energy storage.

In one example, the $DTE_{th}$ may be determined by means of an algorithm such that the risk of overusing the technical margin may be reduced. The $DTE_{th}$ may vary depending on the parameters.

The one or more vehicle related parameters may for example comprise the weight of the vehicle. The $DTE_{th}$ of a heavy vehicle may for example may for example be set to a lower value than for a less heavy vehicle due to increased energy consumption.

The information related to a vehicle route may for example comprise the topology of a recent vehicle route and/or the topology of an upcoming vehicle route. The $DTE_{th}$ may for example be determined taking into consideration the vehicle's energy consumption of a recent route. A smooth and predictable energy consumption may result in a higher $DTE_{th}$ compared to a less predictable one. In a similar way, the $DTE_{th}$ may be determined taking into consideration an upcoming vehicle route. For example, $DTE_{th}$ may be determined considering the topology of the vehicle's route and an estimated amount of power required to propel the vehicle according to a required speed profile. Moreover, by evaluating the individual driving behavior and energy consumption of different vehicle operators over a specific period of time, the $DTE_{th}$ can be adapted to the current vehicle operator.

In an embodiment, the information related to a vehicle route may be obtained at least based on one of map data and sensor data. In one example, such information may be obtained from e.g., digital maps including topographical information, in combination with positioning information, such as GPS information. The positioning information may be used to determine the location of the vehicle relative to the map data so that the section of the road information may be extracted from the map data. In one example, sensor data may include information obtained based on radar information, on camera information, on lidar information as well as any other conventional sensor information providing data related to the vehicle route.

In an embodiment, the information related to a driving pattern of the vehicle may comprise one or more of a current drive mode and a driving preference of a current vehicle operator. An energy efficient drive mode may, for example, allow a higher $DTE_{th}$ compared to a less energy efficient one.

In one example $DTE_{th}$ may be determined based on information related to auxiliary loads of the vehicle, i.e., the load applied by auxiliary equipment, such as air conditioning, cooling system, electrical systems etc. Increased energy consumption in the vehicle due to auxiliary loads may, for example, result on lower $DTE_{th}$ compared to the $DTE_{th}$ in a vehicle with lower energy consumption.

In one example $DTE_{th}$ may be determined based on the capacity of the vehicle's energy storage 103, i.e., on the one or more batteries 104 in the vehicle. Especially the size of the technical safety margin may affect the size of the $DTE_{th}$. A high technical safety margin may allow higher $DTE_{th}$ compared to batteries with lower safety margin.

If the $DTE_1$ is estimated to be below the $DTE_{th}$ value i.e., Yes in step 214, the method continues to step 220 otherwise, if NO in step 214 the method continues to method step 260.

In step 220 the $DTE_2$ value is determined as described with reference to Figure 2a. The DTE2 value is determined at least based on an actual distance travelled since the $DTE_1$ value was estimated to be below the $DTE_{th}$ value.

In an embodiment, the $DTE_2$ value may be determined by subtracting the actual distance travelled since the $DTE_1$ value was estimated to be below the $DTE_{th}$ value from the $DTE_{th}$ value. This may be achieved by saving the vehicles mileage at the position when the $DTE_1$ value was estimated to be below the $DTE_{th}$ value and determining the $DTE_2$ at a current position according to the following:

$$DTE_2 = (M1 + DTE_{th} - M2)$$

where:

M1 is the vehicles saved mileage at the position when the $DTE_1$ value was estimated to be below the $DTE_{th}$ value;
$DTE_{th}$ is the DTE threshold, and
M2 is the mileage at the current position.

In an embodiment, the actual distance travelled since the $DTE_1$ value was estimated to be below the $DTE_{th}$ value may be based on at least one of trip meter mileage, odometer mileage, map data and/or GPS data.

In step 230 on the method 200 following the step 220, the DTE parameter is set as described with reference to Figure 2a. The DTE parameter is set at least based on the $DTE_2$ value when the $DTE_1$ value is estimated to be below the $DTE_{th}$ value, i.e., between the position P2 and the position P6 in Figure 4, which may be done in a number of different ways.

In an embodiment, as illustrated in Figure 2c, the remaining DTE parameter is set to the remaining

$DTE_2$ value as illustrated by the solid $DTE_2$ plot between the position P2 and the position P6 in Figure 4 when the $DTE_1$ value is estimated to be below the $DTE_{th}$ value. Below the $DTE_{th}$, the DTE parameter depends thus only on the actual distance the vehicle travels. As previously explained, DTE parameter may hereby be perceived by the vehicle operator as very predictable and trustworthy.

In an embodiment, as illustrated in Figure 2d, the method step 230 of setting the remaining DTE parameter when the $DTE_1$ value is estimated to be below the $DTE_{th}$ value comprises:

In step 232 determining whether the $DTE_2$ value determined in step 220 of the method 200, exceeds the $DTE_1$ value estimated in step 210 of the method 200.

If it is determined that $DTE_2 > DTE_1$, i.e., Yes in Figure 2c, the method continues to step 240 where the remaining DTE parameter is set to the remaining $DTE_2$ value. Otherwise, if it is determined that $DTE_2$ equals or is less than $DTE_1$, i.e., NO in Figure 2c, the method continues to step 250 where the remaining DTE parameter is set to the $DTE_1$ value.

Thus, for the remaining distance below the $DTE_{th}$, the DTE parameter is set to equal the max value out of $DTE_1$ and $DTE_2$:

DTE = MAX ($DTE_1$, $DTE_2$).

This embodiment may be illustrated by the $DTE_1$ and $DTE_2$ plots in Figure 4. When DTE1 falls below the $DTE_{th}$ at the position P2, the DTE parameter is set to DTE2 between the position P2 and the position P3 where $DTE_2 > DTE_1$ Between the position P3 and the position P4 the $DTE_1$ value exceeds the $DTE_2$ value. Thus, between the positions P3 and P4, the DTE parameter is set to $DTE_1$ value. Between the position P4 and the position P6 the $DTE_2$ value again exceeds the $DTE_1$ value. Thus, between the positions P4 and P6 the DTE parameter is set to $DTE_2$ value.

In an embodiment, in step 260 in Figure 2b, when the $DTE_1$ value is estimated to equal or exceed $DTE_{th}$ value, the DTE parameter is set to equal the DTE1 value illustrated in Figure 4 by the dashed $DTE_1$ plot between the position P1 and the position P2.

Once the remaining DTE parameter has been set according any of the steps 230 or 260 in Figure 2d, the method may continue to the optional step 270 comprising presenting said DTE parameter for the vehicle operator, which may take place via the presentation means 150.

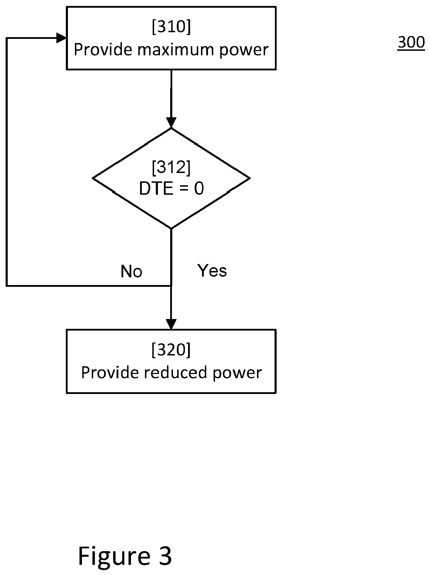

Now turning to Figure 3 showing a flow chart of a method 300 for controlling an electrical machine 102 of an electric vehicle, such as the vehicle 100. The method 300 is performed by a control arrangement of the vehicle. During a normal mode operation of the vehicle, i.e., prior to the DTE parameter value is decreased to 0, the electrical machine 102 is configured to in step 310 of the method 300, provide a maximum available power, $P_{max}$, for propelling the vehicle as illustrated by the "Available power" plot in Figure 4 between the position P1 and the position P6.

The method 300 comprises when a DTE parameter value is decreased to 0 reducing, in step 320 the maximum available power $P_{max}$ provided by the electrical machine 102 for operating the vehicle 100, wherein the DTE parameter is set according to the method 200 disclosed herein. Thereby, the vehicle is operated in a turtle mode.

Thus, in the step 312 of the method 300, following the step 310, it is determined if the DTE parameter equals 0. If "Yes" in step 312, the method 300 continues to step 320, where the maximum available power $P_{max}$ provided by the electrical machine is reduced as illustrated in Figure 4 where the available power is reduced to a reduced power $P_{red}$ at the position P6. Otherwise, if "No" in step 312, the method may return to step 310.

According to an aspect of the invention, a control arrangement 120 for setting a remaining DTE parameter in an electric vehicle 100 is presented. The control arrangement 120 includes means 121 arranged for estimating a $DTE_1$ value at least based on a remaining SoC of the vehicle's energy storage.

Moreover, the control arrangement 120 includes means 122 arranged for, when the $DTE_1$ value is estimated to be below a $DTE_{th}$ value, determining a $DTE_2$ value at least based on an actual distance travelled since the $DTE_1$ value was estimated to be below the $DTE_{th}$ value.

Furthermore, the control arrangement 120 includes means 123 arranged for setting the remaining DTE parameter at least based on the $DTE_2$ value, when the $DTE_1$ value is estimated to be below a $DTE_{th}$ value.

The control arrangement 120, e.g. a device or a control device according to the invention may be arranged for performing all of the above, in the claims, and in the herein described embodiments method steps. The control arrangement 120 is hereby provided with the above-described advantages for each respective embodiment. The invention is also related to a vehicle 100 including the control arrangement 120.

Now turning to Figure 5 which illustrates the control arrangement 500/120, which may correspond to or may include the above-mentioned control units 121 and 122 i.e. the control unit performing the method steps of the disclosed invention. The control arrangement 500/120 comprises a computing unit 501, which can be constituted by essentially any suitable type of processor or microcomputer, e.g. a circuit for digital signal processing (Digital Signal Processor, DSP), or a circuit having a predetermined specific function (Application Specific Integrated Circuit, ASIC). The computing unit 501 is connected to a memory unit 502 arranged in the control arrangement 500/120, which memory unit provides the computing unit 501 with, e.g., the stored program code and/or the stored data which the computing unit 501 requires to be able to perform computations. The computing unit 501 is also arranged to store partial or final results of computations in the memory unit 502.

In addition, the control arrangement 500/120 is provided with devices 511, 512, 513, 514 for receiving and transmitting input and output signals. These input and output signals can contain waveforms, impulses, or other attributes which, by the devices 511, 513 for the reception of input signals, can be detected as information and can be converted into signals which can be processed by the computing unit 501. These signals are then made available to the computing unit 501. The devices 512, 514 for the transmission of output signals are arranged to convert signals received from the computing unit 501 in order to create output signals by, e.g., modulating the signals, which can be transmitted to other parts of and/or systems in the vehicle 100.

Each of the connections to the devices for receiving and transmitting input and output signals can be constituted by one or more of a cable; a data bus, such as a CAN bus (Controller Area Network bus), a MOST bus (Media Orientated Systems Transport bus), or some other bus configuration; or by a wireless connection. A person skilled in the art will appreciate that the above-stated computer can be constituted by the computing unit 501 and that the above- stated memory can be constituted by the memory unit 502.

Control systems in modern vehicles commonly comprise communication bus systems consisting of one or more communication buses for linking a number of electronic control units (ECU's), or controllers, and various components located on the vehicle. Such a control system can comprise a large number of control units and the responsibility for a specific function can be divided amongst more than one control unit. Vehicles of the shown type thus often comprise significantly more control units than are shown in Figures 1 and 4, which is well known to the person skilled in the art within this technical field.

In a shown embodiment, the invention may be implemented by the above-mentioned control units 121 - 123. The invention can also, however, be implemented wholly or partially in one or more other control units already in the vehicle 100, or in some control unit dedicated to the invention.

Here and in this document, units are often described as being arranged for performing steps of the method according to the invention. This also includes that the units are designed to and/or configured to perform these method steps.

The control units 121 - 123 are in Figure 1 illustrated as separate units. These units may, however, be logically separated but physically implemented in the same unit or can be both logically and physically arranged together. The units may e.g. correspond to groups of instructions, which can be in the form of programming code, that are input into, and are utilized by a processor/computing unit 501 when the unit is active and/or is utilized for performing its method step.

The person skilled in the art will appreciate that the herein described embodiments for controlling an engine may also be implemented in a computer program, which, when it is executed in a computer, instructs the computer to execute the method. The computer program is usually constituted by a computer program product 503 stored on a non-transitory/non-volatile digital storage medium, in which the computer program is incorporated in the computer-readable medium of the computer program product. The computer-readable medium comprises a suitable memory, such as, e.g.: ROM (Read-Only Memory), PROM (Programmable Read-Only Memory), EPROM (Erasable PROM), Flash memory, EEPROM (Electrically Erasable PROM), a hard disk unit, etc. The invention is not limited to the above-described embodiments. Instead, the invention relates to, and encompasses all different embodiments being included within the scope of the independent claims.

**Claims**

1. A method (200) performed by a control arrangement for setting a remaining Distance to Empty (DTE) parameter in an electric vehicle (100), wherein the control arrangement is configured to estimate (210) a first remaining Distance to Empty ($DTE_1$) value at least based on a remaining State of Charge (SoC) of the vehicle's energy storage,
   the method comprising when the first remaining Distance to Empty ($DTE_1$) value is estimated to be below a Distance to Empty threshold ($DTE_{th}$) value:

   determining (220) a second remaining Distance to Empty ($DTE_2$) value at least based on an actual distance travelled since the first remaining Distance to Empty ($DTE_1$) value was estimated to be below the Distance to Empty threshold ($DTE_{th}$) value, and
   setting (230) the remaining Distance to Empty (DTE) parameter at least based on the second remaining Distance to Empty ($DTE_2$) value.

2. The method (200) according to claim 1, wherein the remaining Distance to Empty (DTE) parameter is set (230) to the second remaining Distance to Empty ($DTE_2$) value when the first remaining Distance to Empty ($DTE_1$) value is estimated to be below the Distance to Empty threshold ($DTE_{th}$) value.

3. The method (200) according to claim 1, wherein the setting (230) the remaining Distance to Empty (DTE) parameter when the first remaining Distance to Empty ($DTE_1$) value is estimated to be below a Distance to Empty threshold ($DTE_{th}$) value comprises
   setting (240) the remaining Distance to Empty (DTE) parameter to the second remaining Distance to Empty ($DTE_2$) value when the second remaining Distance to Empty ($DTE_2$) value exceeds the first remaining Distance to Empty ($DTE_1$) value, otherwise,
   setting (250) the remaining Distance to Empty (DTE) parameter to equal the first remaining Distance to Empty ($DTE_1$) value.

4. The method (200) according to any of claims 1-3, further comprising when the first remaining Distance to Empty ($DTE_1$) value is estimated to equal or exceed the Distance to Empty threshold ($DTE_{th}$) value: setting (260) the remaining Distance to Empty (DTE) parameter to equal the first remaining Distance to Empty ($DTE_1$) value.

5. The method (200) according to any one of the preceding claims, wherein the second remaining Distance to Empty ($DTE_2$) value is determined by subtracting the actual distance travelled since the first remaining Distance to Empty ($DTE_1$) value was estimated to be below the Distance to Empty threshold ($DTE_{th}$) value from the Distance to Empty threshold ($DTE_{th}$) value.

6. The method (200) according to any of the proceeding claims, further comprising determining the actual distance travelled since the first remaining Distance to Empty ($DTE_1$) value was estimated to be below the Distance to Empty threshold ($DTE_{th}$) value based on at least one of trip meter mileage, odometer mileage, map data and/or GPS data.

7. The method (200) according to any of the proceeding claims, wherein the threshold ($DTE_{th}$) value is a predetermined value.

8. The method (200) according to any one of claims 1 6, further comprising determining the threshold ($DTE_{th}$) value at least based of one of

- one or more vehicle related parameters,
- information related to a vehicle route,
- information related to a driving pattern of the vehicle,
- information related to auxiliary loads of the vehicle, and
- capacity of the vehicle's energy storage.

9. The method (200) according to claim 8, wherein the information related to a vehicle route may be obtained at least based on one of map data and sensor data.

10. The method (200) according to any one of claims 8 - 9, wherein the information related to a driving pattern of the vehicle comprises one or more of a current drive mode and a driving preference of a current vehicle operator.

11. A method (300) performed by a control arrangement for controlling an electrical machine (102) of an electric vehicle (100), wherein the electrical machine (102) is configured to provide [310] a maximum available power ($P_{max}$) for propelling the vehicle, the method comprising, when a remaining Distance to Empty (DTE) parameter value is decreased to 0: reducing [320] the maximum available power (Pmax) provided by the electrical machine (102) for operating the vehicle (100), wherein the remaining Distance to Empty (DTE) parameter is set according to any of claims 1-10.

12. A control arrangement for setting a remaining Distance to Empty (DTE) parameter in an electric vehicle (100), wherein the control arrangement is configured to estimate (210) a first remaining Distance to Empty ($DTE_1$) value at least based on a remaining State of Charge (SoC) of the vehicle's energy storage,
the control arrangement being configured to, when the first remaining Distance to Empty ($DTE_1$) value is estimated to be below a Distance to Empty threshold ($DTE_{th}$) value:

determine (220) a second remaining Distance to Empty ($DTE_2$) value at least based on an actual distance travelled since the first remaining Distance to Empty ($DTE_1$) value was estimated to be below the Distance to Empty threshold ($DTE_{th}$) value, and
set (230) the remaining Distance to Empty (DTE) parameter at least based on the second remaining Distance to Empty ($DTE_2$) value.

13. A vehicle (100) comprising a control arrangement (120) according to claim 12.

14. A computer program comprising instructions which, when the program is executed by a computer, cause the computer to carry out the method (200) according to any one of the claims 1 to 11.

15. A computer-readable medium comprising instructions which, when executed by a computer, cause the computer to carry out the method (200) according to any one of the claims 1 to 11.

Figure 1

```
┌─────────────────────────────┐
│           [210]             │        200
│       Estimate DTE₁         │
└─────────────────────────────┘
              │
              ▼
┌─────────────────────────────┐
│           [220]             │
│       Determine DTE₂        │
└─────────────────────────────┘
              │
              ▼
┌─────────────────────────────┐
│           [230]             │
│     Set DTE based on DTE₂   │
└─────────────────────────────┘
```

# Figure 2a

```
        ┌─────────────────────┐
        │       [210]         │
───────▶│   Estimate DTE₁     │
│       └─────────────────────┘
│                  │
│                  ▼
│       ┌─ ─ ─ ─ ─ ─ ─ ─ ─ ─ ┐
│       │       [212]         │
│       │   Estimate DTEth    │
│       └─ ─ ─ ─ ─ ─ ─ ─ ─ ─ ┘
│                  │                              200
│                  ▼
│              ╱ [214]  ╲
│            ╱  DTE₁ <    ╲
│            ╲   DTEth    ╱
│              ╲        ╱
│            No  │  Yes
│        ┌───────┴───────────────┐
│        ▼                       ▼
│  ┌─ ─ ─ ─ ─ ─ ─ ┐      ┌───────────────────┐
│  │    [260]      │      │      [220]        │
│  │ Set DTE = DTE₁│      │  Determine DTE₂   │
│  └─ ─ ─ ─ ─ ─ ─ ┘      └───────────────────┘
│        │                       │
│        │                       ▼
│        │               ┌───────────────────┐
│        │               │      [230]        │
│        │               │    Set DTE        │
│        │               └───────────────────┘
│        └───────┬───────────────┘
│                ▼
│       ┌─ ─ ─ ─ ─ ─ ─ ─ ─ ─ ─ ┐
│       │        [270]          │
└───────│ Present DTE for operator│
        └─ ─ ─ ─ ─ ─ ─ ─ ─ ─ ─ ┘
```

The flowchart shows:
- [210] Estimate $DTE_1$
- [212] Estimate $DTE_{th}$
- [214] $DTE_1 < DTE_{th}$
- No → [260] Set $DTE = DTE_1$
- Yes → [220] Determine $DTE_2$
- [230] Set DTE
- [270] Present DTE for operator
- 200

# Figure 2b

[220]

[230]
Set DTE = $DTE_2$

Figure 2c

[220]

[230]

No

[232]
$DTE_2 > DTE_1$

Yes

[250]
Set DTE = $DTE_1$

[240]
Set DTE = $DTE_2$

Figure 2d

[310]
Provide maximum power

300

[312]
DTE = 0

No    Yes

[320]
Provide reduced power

Figure 3

Figure 4

Figure 5

Europäisches
Patentamt

European
Patent Office

Office européen
des brevets

## EUROPEAN SEARCH REPORT

**Application Number**

**EP 22 19 2276**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 2020 0126135 A (SSANGYONG MOTOR CO [KR]) 6 November 2020 (2020-11-06) | 1,2,4,7, 12-15 | INV. B60L58/12 |
| Y | * abstract * | 11 | |
| A | * paragraph [0018] - paragraph [0030] * * figure 2 * | 3 | |
| | ----- | | |
| X | US 2017/059332 A1 (CHOI KWON HYOUNG [KR]) 2 March 2017 (2017-03-02) | 1,2,5,6, 8,12-15 | |
| Y | * paragraphs [0003], [0044] * | 9,10 | |
| A | * paragraph [0049] - paragraph [0051] * * paragraph [0057] - paragraph [0061] * * figure 4 * | 3 | |
| | ----- | | |
| Y | US 2022/176939 A1 (POLL MARK [US] ET AL) 9 June 2022 (2022-06-09) | 9 | |
| A | * paragraphs [0045], [0051] * | 3 | |
| | ----- | | |
| Y | US 2012/176231 A1 (SKAFF RYAN [US] ET AL) 12 July 2012 (2012-07-12) | 10 | |
| A | * paragraph [0030] * | 3 | TECHNICAL FIELDS SEARCHED (IPC) |
| | ----- | | |
| Y | US 9 437 058 B2 (LUKE HOK-SUM HORACE [US]; TAYLOR MATTHEW WHITING [US]; GOGORO INC [CN]) 6 September 2016 (2016-09-06) | 11 | B60L |
| A | * column 17, paragraphs 2, 3 * * figure 5 * | 3 | |
| | ----- | | |

The present search report has been drawn up for all claims

| Place of search | Date of completion of the search | Examiner |
|---|---|---|
| The Hague | 6 February 2023 | Lutz, Tobias |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 19 2276

This annex lists the patent family members relating to the patent documents cited in the above-mentioned European search report.
The members are as contained in the European Patent Office EDP file on
The European Patent Office is in no way liable for these particulars which are merely given for the purpose of information.

06-02-2023

| Patent document cited in search report | Publication date | Patent family member(s) | Publication date |
|---|---|---|---|
| KR 20200126135 A | 06-11-2020 | NONE | |
| US 2017059332 A1 | 02-03-2017 | CN 106494405 A | 15-03-2017 |
| | | KR 20170024796 A | 08-03-2017 |
| | | US 2017059332 A1 | 02-03-2017 |
| US 2022176939 A1 | 09-06-2022 | CN 114604250 A | 10-06-2022 |
| | | DE 102021132088 A1 | 09-06-2022 |
| | | US 2022176939 A1 | 09-06-2022 |
| US 2012176231 A1 | 12-07-2012 | CN 102582628 A | 18-07-2012 |
| | | CN 106218410 A | 14-12-2016 |
| | | DE 102012200098 A1 | 12-07-2012 |
| | | US 2012176231 A1 | 12-07-2012 |
| | | US 2014372019 A1 | 18-12-2014 |
| | | US 2017028852 A1 | 02-02-2017 |
| US 9437058 B2 | 06-09-2016 | CN 103889773 A | 25-06-2014 |
| | | EP 2736760 A2 | 04-06-2014 |
| | | EP 3340131 A1 | 27-06-2018 |
| | | JP 2014525230 A | 25-09-2014 |
| | | TW 201309502 A | 01-03-2013 |
| | | US 2013030630 A1 | 31-01-2013 |
| | | WO 2013016542 A2 | 31-01-2013 |

EPO FORM P0459

For more details about this annex : see Official Journal of the European Patent Office, No. 12/82